# EUROPEAN PATENT APPLICATION

(11) **EP 2 348 355 A1**
(43) Date of publication of application: **27.07.2011**
(21) Application number: 09825887.4
(22) Date of filing: 09.11.2009
(51) Int. Cl.: G02F 1/1368, G02F 1/1337

(54) **LIQUID CRYSTAL DISPLAY DEVICE AND METHOD FOR MANUFACTURING LIQUID CRYSTAL DISPLAY DEVICE**

(30) Priority: 11.11.2008 JP 2008289152
(71) Applicant: Sharp Kabushiki Kaisha, Osaka-shi, Osaka 545-8522 (JP)
(72) Inventor: NAGATA, Hisashi, Osaka-shi, Osaka 545-8522 (JP)
(74) Representative: Müller - Hoffmann & Partner
(86) International application number: PCT/JP2009/005952
(87) International publication number: WO 2010/055633

(57) **Abstract**

To prevent occurrence of display roughness in a liquid crystal display device, a liquid crystal display device of the present invention, which has a plurality of pixels arranged along a first direction and a second direction, includes: a TFT substrate which includes a signal line extending in the first direction for supplying a display signal to TFTs and a scanning line extending in the second direction for supplying a gate signal to the TFTs; a counter substrate which includes a counter electrode; a liquid crystal layer interposed between the substrates; and an alignment film, wherein at least one of the signal line and the scanning line includes two linear portions linearly extending in the first direction or the second direction at a boundary of two adjacent pixels and a circuitous portion which is interposed between the two linear portions and which is deviated from an imaginary extension of the two linear portions.

## Description

### TECHNICAL FIELD

The present invention relates to a vertical alignment type liquid crystal display device which includes a vertical alignment layer.

### BACKGROUND ART

In recent years, liquid crystal display devices that are characterized by their thinness and light weight are widely used as display devices for the display of personal computers and the display section of mobile information terminals. However, conventional Twisted Nematic mode (TN mode) and Super Twisted Nematic mode (STN mode) liquid crystal display devices disadvantageously have narrow viewing angles. To solve this problem, various technical developments have been made.

A known example of liquid crystal display devices which have improved viewing angle characteristics is a divisional alignment type liquid crystal display device which includes a vertical alignment type liquid crystal layer. A liquid crystal display device of this type is called a VA (Vertical Alignment) mode liquid crystal display device. As one example of the VA mode liquid crystal display device, Patent Document 1 discloses a MVA (Multi-domain Vertical Alignment) mode liquid crystal display device.

In the MVA mode, each of a pair of substrates which oppose each other with the intervention of a liquid crystal layer has an alignment regulating structure for regulating the alignment of liquid crystal molecules. Specifically, the alignment regulating structure may be a projection structure (protrusion) formed on an electrode or a slit formed in an electrode. With the alignment regulating structure such as a projection structure and a slit, a plurality of domains among which the azimuth of inclination of liquid crystal molecules is different are formed when a voltage is applied across the liquid crystal layer, so that the viewing angle characteristics are improved.

Patent Document 2 describes a different type of VA mode liquid crystal display device, which is called a CPA (Continuous Pinwheel Alignment) mode liquid crystal display device. In the CPA mode, one of a pair of electrodes that oppose each other with the intervention of a liquid crystal layer has an opening or notch. An oblique electric field which is generated above the opening or notch is utilized to radially incline liquid crystal molecules, whereby a wide viewing angle is realized.

Patent Document 3 discloses a technique of stabilizing a radial inclination alignment of liquid crystal molecules in the CPA mode. According to this technique, a radial inclination alignment formed by an alignment regulating structure provided in one of the substrates (an opening or notch formed in an electrode, which contributes to generation of an oblique electric field) is stabilized by another alignment regulating structure (e.g., protrusion) provided in the other substrate.

On the other hand, providing a polymer structure as an alignment sustaining layer for regulating the pretilt angle and the pretilt direction of liquid crystal molecules is proposed in Patent Documents 4, 5, 6, and 7. This is called a PSA (Polymer-Sustained Alignment) technology. The polymer structure is formed by photopolymerizing or thermally polymerizing a polymerizable composition contained beforehand in the liquid crystal layer. By providing such a polymer structure in a VA mode liquid crystal display device, the alignment stability and the response characteristics can be improved.

### CITATION LIST

### PATENT LITERATURE

Patent Document 1: Japanese Laid-Open Patent Publication No. 11-242225
Patent Document 2: Japanese Laid-Open Patent Publication No. 2003-43525
Patent Document 3: Japanese Laid-Open Patent Publication No. 2002-202511
Patent Document 4: Japanese Laid-Open Patent Publication No. 2002-23199
Patent Document 5: Japanese Laid-Open Patent Publication No. 2003-149647
Patent Document 6: Japanese Laid-Open Patent Publication No. 2003-177408
Patent Document 7: Japanese Laid-Open Patent Publication No. 2003-307720

### SUMMARY OF INVENTION

### TECHNICAL PROBLEM

The step of forming the polymer structure (hereinafter, referred to as "PSA formation step") is carried out while the liquid crystal molecules are in an inclination alignment in the presence of a predetermined voltage across the liquid crystal layer, rather than in a vertical alignment relative to the substrate surface. Application of the voltage across the liquid crystal layer in the PSA formation step is carried out such that the polarity of the applied voltage is periodically inverted (i.e., alternate driving is performed), whereby polarization of the liquid crystal is prevented.

Examples of the method of voltage application (alternate driving) in the PSA formation step include: (1) oscillating the potential of the counter electrode while the TFTs (thin film transistors) provided in the respective pixels are made conducting so that the potential of the pixel electrodes is fixed; and (2) oscillating the potential of the counter electrode while the TFTs are made non-conducting so that the pixel electrodes are floating (electrically floating).

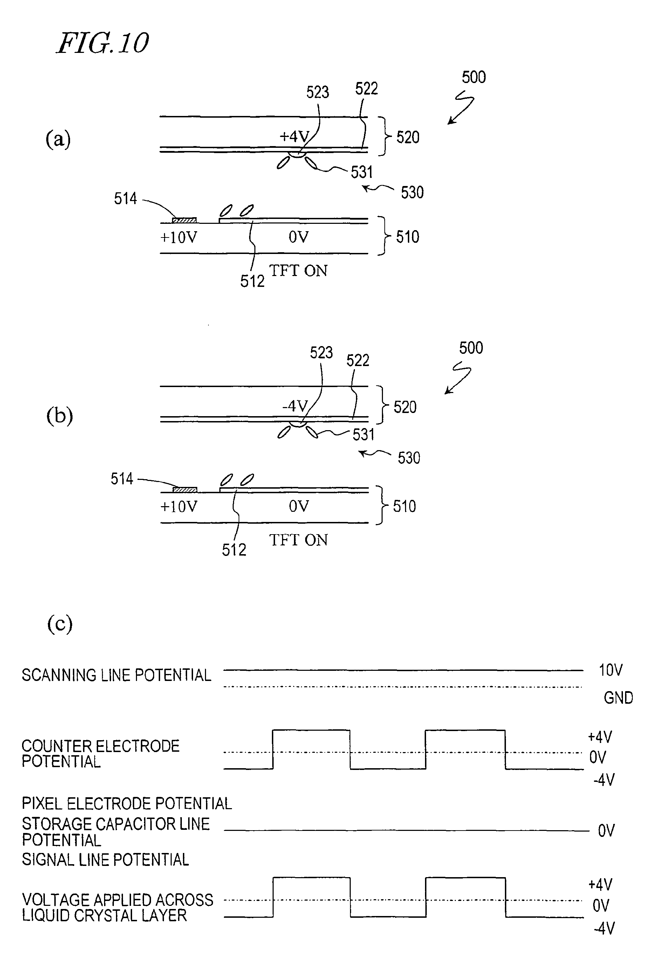

First, a specific example of the method (1) is described with reference to FIG. **10****.** A CPA mode liquid crystal display device **500** shown in FIG. **10** includes a TFT substrate **510** which includes TFTs (not shown) provided in the respective pixels, a counter substrate **520** which opposes the TFT substrate **510,** and a vertical alignment type liquid crystal layer **530** which is interposed between these substrates. On the counter substrate **520,** a projection (protrusion) **523** is provided for regulating the alignment of liquid crystal molecules **531** and fixing the alignment center of the liquid crystal domains.

As shown in FIGS. **10 (a), 10 (b),** and **10 (c)****,** a gate-on voltage of +10 V is applied to the gate electrode of the TFT via a scanning line **514** so that the TFT is conducting. Meanwhile, the pixel electrode **512** is supplied with a potential of 0 V via a signal line (not shown). Under these conditions, the potential of the counter electrode **522** is oscillated between +4 V (the state of FIG. **10(a)****)** and -4 V (the state of FIG. **10(b)****),** whereby the polarity of the voltage which is applied across the liquid crystal layer **530** is periodically inverted in synchronization with the oscillation of the potential of the counter electrode **522.** In this way, the alternate driving is realized.

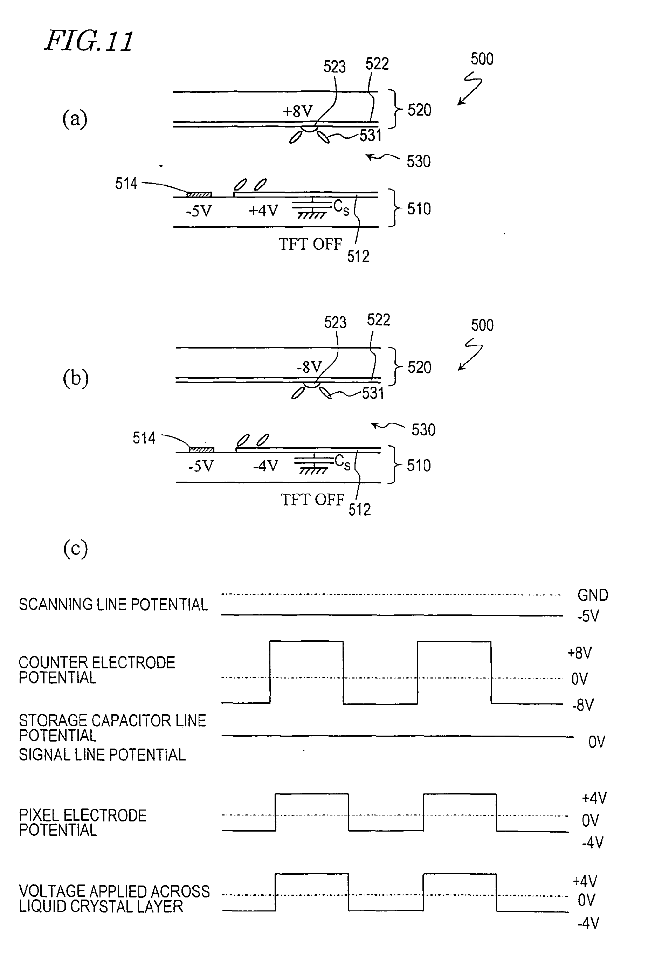

Next, a specific example of the method (2) is described with reference to FIG. **11****.** As shown in FIGS. **11(a), 11(b),** and **11(c)****,** a gate-off voltage of -5 V is applied to the gate electrode of the TFT via the scanning line **514** so that the TFT is non-conducting, and the pixel electrode **512** is floating (electrically floating). Under these conditions, the potential of the counter electrode **522** is oscillated between +8 V (the state of FIG. **11(a)****)** and -8 V (the state of FIG. **11(b)****),** whereby the potential of the pixel electrode **512** is also oscillated. Here, if the liquid crystal capacitance and the storage capacitor C_{S} (schematically expressed by the graphical symbol in the drawing) have equal capacitance values, the potential of the pixel electrode **512** oscillates between +4 V (the state of FIG. **11(a)****)** and -4 V (the state of FIG. **11(b)****).** Accordingly, the polarity of the voltage which is applied across the liquid crystal layer **530** is periodically inverted. In this way, the alternate driving is realized.

However, the present inventor conducted researches and found that, when the PSA formation step is carried out while a voltage is applied across the liquid crystal layer **530** according to the methods (1) and (2), display roughness occurs for the reasons described below, so that the display quality deteriorates.

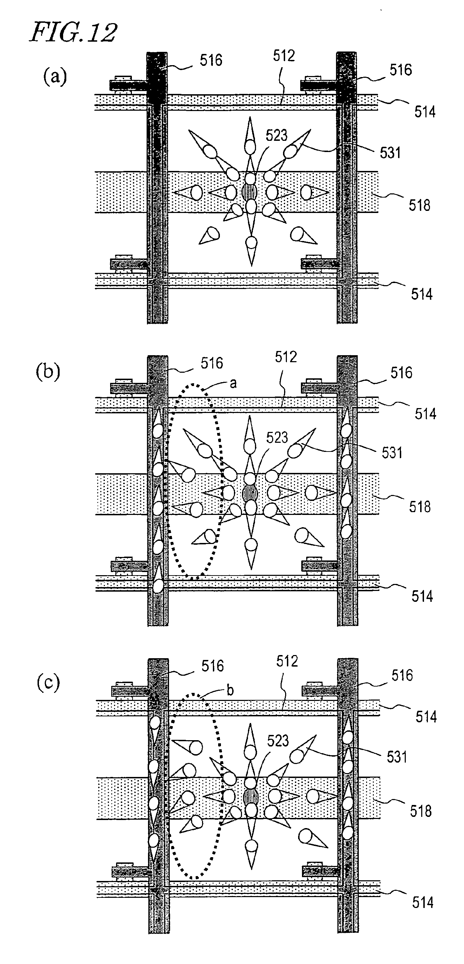

FIG. **12** is a top view of a liquid crystal display device which is seen from the upper surface side, showing the liquid crystal molecules **531** in one pixel which are in an inclination alignment in the PSA formation step. FIG. **12(a)** schematically shows an ideal inclination alignment example of the liquid crystal molecules **531.** FIGS. **12(b)** and **12(c)** schematically show inclination alignment examples resulting from the methods (1) and (2), which can cause display roughness. In these diagrams, for the sake of illustration of the inclination alignment of the liquid crystal molecules **531,** each of the liquid crystal molecules **531** is sketched such that a portion of the molecule which is closer to the counter electrode **522** appears larger (an end of the liquid crystal molecule **531** which is closer to the counter electrode **522** is expressed by a circle).

In the PSA formation step, ideally, the liquid crystal molecules **531** in one pixel are inclined uniformly and radially around the projection **523** (radial inclination alignment) as shown in FIG. **12(a)****.** This serves to realize display of a wide viewing angle, with small display unevenness. However, when the alternate driving is carried out according to the methods (1) and (2), a potential which is different from 0 V is always supplied to the counter electrode **522** while the potentials of a signal line **516** and a storage capacitor line **518** are maintained at 0 V as shown in FIG. **10** and FIG. **11****,** so that the liquid crystal molecules **531** lying above these lines are also inclined. Here, the signal line **516** is extending along the boundary between two adjacent pixels, and therefore, the liquid crystal molecules **531** lying above the signal line **516** are generally equally affected by alignment regulating forces from the both pixels in opposite directions (i.e., the alignment regulating forces from the both pixels are canceled). Accordingly, the liquid crystal molecules **531** lying above the signal line **516** fall in an inclination alignment along the directions of extension of the signal line **516** as shown in FIGS. **12(b)** and **12(c)****.**

FIG. **12(b)** shows that all of the liquid crystal molecules **531** lying above a pair of signal lines **516** are inclined downward in the drawing along the signal lines **516.** FIG. **12(c)** shows that the liquid crystal molecules **531** lying above one of the pair of signal lines **516** are inclined downward in the drawing while the liquid crystal molecules **531** lying above the other signal line **516** are inclined upward in the drawing. In any of these cases, due to the influence of the inclination alignment of the liquid crystal molecules **531** lying above the signal lines **516,** the orientations of the liquid crystal molecules **531** in the vicinity of the signal lines **516** (e.g., encircled regions **a** and **b** in the drawings) are disturbed to be nonuniform, so that the ideal inclination alignment shown in FIG. **12(a)** cannot be obtained. Alternatively, although not shown, the liquid crystal molecules **531** lying above one of the signal lines **516** may be inclined in opposite directions (e.g., upward inclination and downward inclination in the drawing), making a junction at a certain point on the signal line **516,** and in that case, the junction may move to a different position along the signal line **516.** Even in such a case, the alignment of the liquid crystal molecules **531** in the pixel is disturbed to be nonuniform, so that the ideal inclination alignment cannot be obtained.

If the PSA formation step is carried out with such a disturbed inclination alignment, disturbances occur in the initial alignment (pretilt) of liquid crystal molecules in a display operation due to the formed polymer structure. As a result, the alignment varies among the pixels, leading to occurrence of display roughness (nonuniform luminance). In the PSA formation step, a large voltage may be applied across the liquid crystal layer for the purpose of increasing the process speed. In this case, the disturbances in the liquid crystal in the PSA formation step are strongly memorized due to the alignment regulating force of the polymer structure, resulting in occurrence of greater roughness in a display operation.

When display is performed in a vertical alignment mode liquid crystal display device of a PSA type or any other type, the alignment of liquid crystal molecules lying above a signal line or scanning line extending along the boundary between pixels becomes unstable, and due to the influence of the unstable alignment, disturbances occur in the alignment of liquid crystal molecules lying above the pixel electrode.

The present invention was conceived in view of the above circumstances. One of the objects of the present invention is to provide a liquid crystal display device which is capable of displaying images of higher quality with reduced display roughness.

### SOLUTION TO PROBLEM

A liquid crystal display device of the present invention has a plurality of pixels arranged in a matrix along a first direction and a second direction that is different from the first direction, and includes: a TFT substrate which includes thin film transistors and pixel electrodes corresponding to respective ones of the plurality of pixels, a signal line generally extending in the first direction for supplying a display signal to the thin film transistors, and a scanning line generally extending in the second direction for supplying a gate signal to the thin film transistors; a counter substrate which includes a counter electrode that opposes the pixel electrodes; a liquid crystal layer interposed between the TFT substrate and the counter substrate; and an alignment film provided over a surface of at least one of the TFT substrate and the counter substrate, which is closer to the liquid crystal layer, for orienting liquid crystal molecules contained in the liquid crystal layer generally perpendicular to a substrate surface, wherein at least one of the signal line and the scanning line includes two linear portions linearly extending in the first direction or the second direction at a boundary of two adjacent pixels and a circuitous portion which is interposed between the two linear portions and which is deviated from an imaginary extension of the two linear portions.

In one embodiment, the TFT substrate includes a storage capacitor line extending in the second direction, the signal line includes two linear portions and the circuitous portion, and the circuitous portion is provided at a position overlapping the storage capacitor line when viewed in a direction vertical to the substrate.

In one embodiment, at least part of the circuitous portion is provided at a position overlapping the pixel electrode when viewed in a direction vertical to the substrate.

In one embodiment, none of the signal line and the scanning line is provided in a region which lies between the two linear portions and which lies on an imaginary extension of the two linear portions.

In one embodiment, the circuitous portion is provided at the middle of one side of the pixel.

In one embodiment, when a potential difference is produced between the signal line or the scanning line and the counter electrode, a region is formed due to the circuitous portion in which orientations of liquid crystal molecules are maintained generally perpendicular to a substrate surface.

In one embodiment, when a potential difference is produced between the signal line or the scanning line and the counter electrode, a boundary of a liquid crystal alignment along the signal line or the scanning line is formed at the boundary of the two pixels due to the circuitous portion.

One embodiment further includes an alignment sustaining layer provided over a surface of the alignment film which is closer to the liquid crystal layer, the alignment sustaining layer being configured to regulate orientations of the liquid crystal molecules relative to a substrate surface.

In one embodiment, the alignment sustaining layer is formed by a polymer structure which is formed by polymerizing a polymerizable composition contained in the liquid crystal layer.

Another liquid crystal display device of the present invention has a plurality of pixels arranged in a matrix along a first direction and a second direction that is different from the first direction, and includes: a TFT substrate which includes thin film transistors and pixel electrodes corresponding to respective ones of the plurality of pixels, a signal line generally extending in the first direction for supplying a display signal to the thin film transistors, and a scanning line generally extending in the second direction for supplying a gate signal to the thin film transistors; a counter substrate which includes a counter electrode that opposes the pixel electrodes; a liquid crystal layer interposed between the TFT substrate and the counter substrate; and an alignment film provided over a surface of at least one of the TFT substrate and the counter substrate, which is closer to the liquid crystal layer, for orienting liquid crystal molecules contained in the liquid crystal layer generally perpendicular to a substrate surface, wherein when a potential difference is produced between the signal line or the scanning line and the counter electrode, a region is formed at a boundary of two adjacent pixels in which orientations of liquid crystal molecules are maintained generally perpendicular to a substrate surface.

In one embodiment, when a potential difference is produced between the signal line or the scanning line and the counter electrode, a boundary of a liquid crystal alignment along the signal line or the scanning line is formed at the boundary of the two pixels due to the liquid crystal molecules which are maintained generally perpendicularly in the region.

In one embodiment, at least one of the signal line and the scanning line includes two linear portions linearly extending in the first direction or the second direction at the boundary of the two pixels and a circuitous portion which is interposed between the two linear portions and which detours around the region.

A liquid crystal display device fabrication method of the present invention is a method of fabricating a liquid crystal display device which has a plurality of pixels arranged in a matrix along a first direction and a second direction that is different from the first direction, the liquid crystal display device including a TFT substrate which includes thin film transistors and pixel electrodes corresponding to respective ones of the plurality of pixels, a signal line generally extending in the first direction for supplying a display signal to the thin film transistors, and a scanning line generally extending in the second direction for supplying a gate signal to the thin film transistors, a counter substrate which includes a counter electrode that opposes the pixel electrodes, a liquid crystal layer interposed between the TFT substrate and the counter substrate, and an alignment film provided over a surface of at least one of the TFT substrate and the counter substrate, which is closer to the liquid crystal layer, for orienting liquid crystal molecules contained in the liquid crystal layer generally perpendicular to a substrate surface, the method including the steps of: providing a liquid crystal display panel in which the liquid crystal layer containing a polymerizable composition is interposed between the TFT substrate and the counter substrate; and polymerizing the polymerizable composition contained in the liquid crystal layer in the presence of an applied voltage across the liquid crystal layer to form an alignment sustaining layer over a surface of the alignment film which is closer to the liquid crystal layer, wherein during the polymerization step, there is a region at a boundary of two adjacent pixels in which orientations of liquid crystal molecules are maintained generally perpendicular to a substrate surface.

In one embodiment, during the polymerization step, an alignment boundary of a liquid crystal alignment along the signal line or the scanning line is formed at the boundary of the two pixels due to the liquid crystal molecules which are maintained generally perpendicularly in the region.

In one embodiment, at least one of the signal line and the scanning line includes two linear portions linearly extending in the first direction or the second direction at the boundary of the two pixels and a circuitous portion which is interposed between the two linear portions and which detours around the region.

### ADVANTAGEOUS EFFECTS OF INVENTION

According to the present invention, in the process of forming the alignment sustaining layer of a PSA-type liquid crystal display device, liquid crystal molecules lying above at least one of a signal line and a scanning line can be stably oriented in more desirable directions. Accordingly, in the process of forming the alignment sustaining layer, disturbances in the alignment of liquid crystal molecules lying above the pixel electrodes decrease, so that the alignment sustaining layer can exert an ideal initial alignment regulating force on the liquid crystal molecules. Thus, variations in the luminance characteristics among the pixels decrease, so that occurrence of roughness in a display operation can be reduced.

Also, according to the present invention, when display is performed in a liquid crystal display device, liquid crystal molecules lying above a signal line or scanning line can be stably oriented in desirable directions. Therefore, disturbances in the alignment of liquid crystal molecules lying above the pixel electrodes decrease. As a result, variations in the luminance characteristics among the pixels decrease, so that occurrence of roughness in a display operation can be reduced.

### BRIEF DESCRIPTION OF DRAWINGS

[FIG. **1**] A schematic plan view of a liquid crystal display device **100** of a preferred embodiment of the present invention, showing a region corresponding to a pixel.
[FIG. **2**] A schematic cross-sectional view of the liquid crystal display device **100** of a preferred embodiment of the present invention, taken along line **A-A'** of FIG. **1****.**
[FIG. **3**] A diagram which schematically illustrates the liquid crystal display device **100** of a preferred embodiment of the present invention, showing an equivalent circuit for one pixel.
[FIG. **4**] A cross-sectional view schematically showing the liquid crystal display device **100** of a preferred embodiment of the present invention, taken along line **B-B'** of FIG. **1****.**
[FIG. **5**] A diagram showing the structure of a variation of a signal line **15** of the present invention.
[FIG. **6**] A plan view schematically showing the alignment of liquid crystal molecules when a voltage is applied across a liquid crystal layer in the liquid crystal display device **100.**
[FIG. **7**] **(a)** and **(b)** are cross-sectional views schematically showing the fabrication steps of the liquid crystal display device **100.**
[FIG. **8**] **(a)** to **(d)** show the potentials which are applied to a scanning line **14,** a storage capacitor line **16,** a counter electrode **22,** a signal line **15,** a pixel electrode **12,** and a liquid crystal layer **30** in the fabrication steps of the liquid crystal display device **100.**
[FIG. **9**] **(a)** is a microscopic image showing the alignment of liquid crystal molecules in a comparative liquid crystal display device example. **(b)** is a microscopic image showing the alignment of liquid crystal molecules in a preferred embodiment of the present invention.
[FIG. **10**] **(a)** to **(c)** are diagrams for illustrating the first example of the method of applying a voltage across the liquid crystal layer in the PSA formation step (method (1)).
[FIG. **11**] **(a)** to **(c)** are diagrams for illustrating the second example of the method of applying a voltage across the liquid crystal layer in the PSA formation step (method (2)).
[FIG. **12**] **(a)** is a diagram schematically showing an ideal alignment example of liquid crystal. **(b)** and **(c)** are diagrams schematically showing alignment examples which include alignment disturbances.

### DESCRIPTION OF EMBODIMENTS

Hereinafter, embodiments of the present invention will be described with reference to the drawings. Note that the present invention is not limited to the embodiments which will be described below.

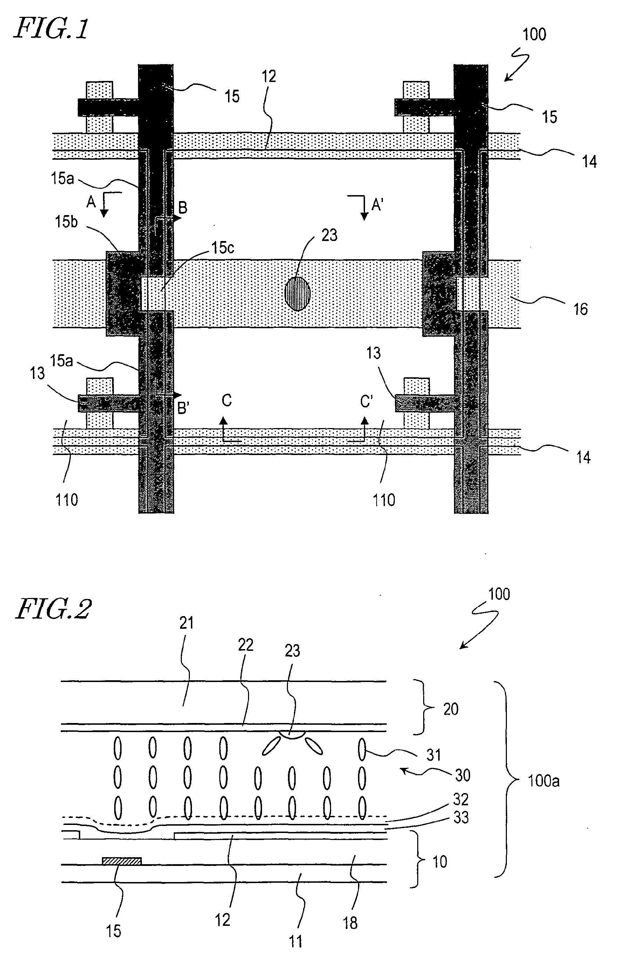

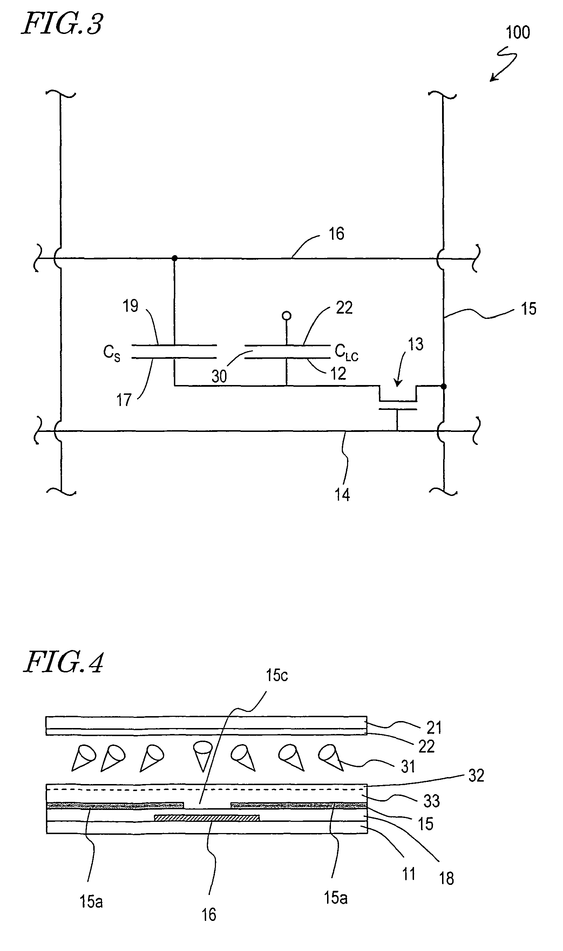

FIG. **1,** FIG. **2****,** and FIG. **3** show a CPA-mode liquid crystal display device **100** of the present embodiment. FIG. **1** is a plan view schematically showing part of the liquid crystal display device **100** corresponding to one pixel. FIG. **2** is a cross-sectional view taken along line **A-A'** of FIG. **1****,** showing a state of the liquid crystal layer across which no voltage is applied (or across which a voltage lower than the threshold is applied). FIG. **3** shows an equivalent circuit of one pixel of the liquid crystal display device **100.**

As shown in FIG. **1** and FIG. **2****,** the liquid crystal display device **100** includes a liquid crystal display panel **100a** and has a plurality of pixels **110** in a matrix arrangement along the vertical direction (first direction) and the horizontal direction (second direction) of FIG. **1****.** The liquid crystal display panel **100a** includes a TFT substrate (active matrix substrate) **10,** a counter substrate **20** which opposes the TFT substrate **10,** and a vertical alignment type liquid crystal layer **30** interposed between the TFT substrate **10** and the counter substrate **20.**

The TFT substrate **10** includes pixel electrodes **12** provided in the respective pixels **110,** TFTs (thin film transistors) **13** which are switching elements electrically coupled to the pixel electrodes **12,** scanning lines (gate bus lines) **14** for supplying scanning signals (gate signals) to the TFTs **13,** and signal lines (source bus lines) **15** for supplying display signals to the TFTs **13.** The TFTs **13,** the scanning lines **14,** and the signal lines **15** are provided on a transparent substrate **11** (such as a glass substrate or a plastic substrate). The signal lines **15** are running along the boundary between the plurality of pixels **110** in the vertical direction of FIG. **1****.** The scanning lines **14** are running along the boundary between the plurality of pixels **110** in the horizontal direction of FIG. **1****.** On the transparent substrate **11,** storage capacitor lines **16** are running generally parallel to the scanning lines **14.** The storage capacitor lines **16** are electrically coupled to a storage capacitor counter electrode **19** which will be described later.

Over the TFTs **13,** the scanning lines **14,** the signal lines **15,** and the storage capacitor lines **16** (on the liquid crystal layer **30** side), an insulating layer **18** is provided. Over the insulating layer **18,** the pixel electrodes **12** are provided in a matrix arrangement so as to correspond to the respective pixels **110.** Note that the scanning lines **14,** the storage capacitor lines **16,** and the gate electrodes of the TFTs **13** are provided in a different layer from that of the signal lines **15** and the source and drain electrodes of the TFTs **13.** Another insulating layer is provided between these layers, although the details of the insulating layer are not shown herein.

The counter substrate **20** includes a counter electrode **22** which opposes the pixel electrodes **12.** The counter electrode **22** is provided on a transparent substrate **21** (such as a glass substrate or a plastic substrate). At a position on the counter electrode **22** which opposes the center of the pixel **110** or pixel electrode **12,** a projection (protrusion) **23** is provided for regulating the alignment of the liquid crystal molecules **31** and fixing the alignment center of a liquid crystal domain. The counter electrode **22** is typically formed as a single sheet of a transparent conductive film which opposes all the pixel electrodes **12,** whereas the pixel electrodes **12** are provided in respective ones of the plurality of pixels. Although not shown herein, typically, a color filter is provided between the transparent substrate **21** and the counter electrode **22.** Therefore, the counter substrate **20** is also referred to as a color filter substrate.

As shown in FIG. **3****,** each of the pixels **110** has a liquid crystal capacitance C_{LC} which is formed by the pixel electrode **12** and the counter electrode **22** and the liquid crystal layer **30** interposed between these layers. Also, each pixel has a storage capacitor C_{S} which is electrically coupled in parallel to the liquid crystal capacitance C_{LC}. The storage capacitor C_{S} includes a storage capacitor electrode **17** which is electrically coupled to the pixel electrodes **12** and a storage capacitor counter electrode **19** which opposes the storage capacitor electrode **17** with the intervention of an insulating substance (insulating layer). The specific structure of the storage capacitor C_{S} which includes the storage capacitor electrode **17** and the storage capacitor counter electrode **19** may be any of various known structures. For example, the storage capacitor electrode **17** may be provided over the storage capacitor lines **16** by patterning a metal layer which is the same as the signal lines **15,** and part of the storage capacitor lines **16** extending over the storage capacitor electrode **17** serves as the storage capacitor counter electrode **19.**

As shown in FIG. **2****,** a surface of the TFT substrate **10** which is closer to the liquid crystal layer **30** is provided with a vertical alignment film **33.** A surface of the vertical alignment film **33** which is closer to the liquid crystal layer **30** is provided with a polymer structure **32** which is an alignment control layer. Although not shown herein, another vertical alignment film having such a configuration is also provided on a surface of the counter substrate **20** which is closer to the liquid crystal layer **30.** Also, typically, optical layers, such as retarders and polarizers, may be provided on the outer sides of respective ones of the TFT substrate **10** and the counter substrate **20.**

The vertical alignment type liquid crystal layer **30** includes liquid crystal molecules **31** of negative dielectric anisotropy, and a chiral agent when necessary. The liquid crystal molecules **31** included in the liquid crystal layer **30** are oriented generally vertical to the surface of the vertical alignment film **33** (or the surface of the TFT substrate **10)** when no voltage is applied across the liquid crystal layer **30.** Note that, in the present embodiment, the polymer structure **32** is provided according to a method which will be described later, so that the liquid crystal molecules **31** are not oriented strictly vertical to the surface of the vertical alignment film **33.**

FIG. **4** shows a cross section taken along line **B-B'** of FIG. **1****.** The vertical alignment film **33** and the polymer structure **32** are also provided over the signal lines **15** and the scanning lines **14** as shown in FIG. **2****.**

As shown in FIG. **1** and FIG. **4****,** the signal line 15 includes two linear portions **15a** linearly extending in the vertical direction (first direction) at the boundary between two adjacent pixels, and a circuitous portion **15b** which is interposed between the two linear portions **15a** and which is deviated from the imaginary extension of the two linear portions **15a.** When viewed in a direction vertical to the substrate, the circuitous portion **15b** is provided on the storage capacitor line **16** (or at a position overlapping the storage capacitor line **16**)**.** When viewed in a direction vertical to the substrate, the circuitous portion **15b** is provided so as to overlap the pixel electrode **12** on the lefthand side of the signal line **15** in FIG**. 1****.** The circuitous portion **15b** may alternatively be provided so as to overlap the pixel electrode **12** on the right-hand side of the signal line **15.**

With the presence of the circuitous portion **15b,** there is a gap **15c** lying between the two linear portions **15a** and lying on the imaginary extension of the two linear portions **15a,** in which the signal line **15** is not provided. When there is a potential different between the signal line **15** and the counter electrode **22,** the liquid crystal molecules **31** lying above the signal line **15** incline from an attitude perpendicular to the substrate surface to an attitude approximately parallel to the equipotential surface. Meanwhile, the liquid crystal molecules **31** lying above the gap **15c** maintain their attitudes generally perpendicular to the substrate surface.

When a potential difference is produced between the signal line **15** and the counter electrode **20,** a region that constitutes a boundary of the alignment of the liquid crystal molecules lying on the boundary between the two adjacent pixels **110** is formed because of the presence of the gap **15c.** In other words, when such a potential difference is produced, the liquid crystal molecules **31** lying above the two linear portions **15a** fall in an inclination alignment according to the voltage, while the liquid crystal molecules **31** lying above the gap **15c** maintain the vertical alignment. Therefore, as shown in FIG. **4****,** the liquid crystal molecules **31** lying above the two linear portions **15a** fall in an inclination alignment which is symmetrical about the vertically-aligned liquid crystal molecules **31** lying above the gap **15c.**

As described above, the circuitous portion **15b** and the gap **15c** function as control means for regulating the orientations of the liquid crystal molecules **31** lying above the signal line **15** in terms of a direction along the signal line **15.** To improve the symmetry of the inclination alignment of the liquid crystal molecules **31** in the pixel **110,** the circuitous portion **15b** and the gap **15c** are preferably provided at the middle of one side of the pixel **110** or the pixel electrode **12.**

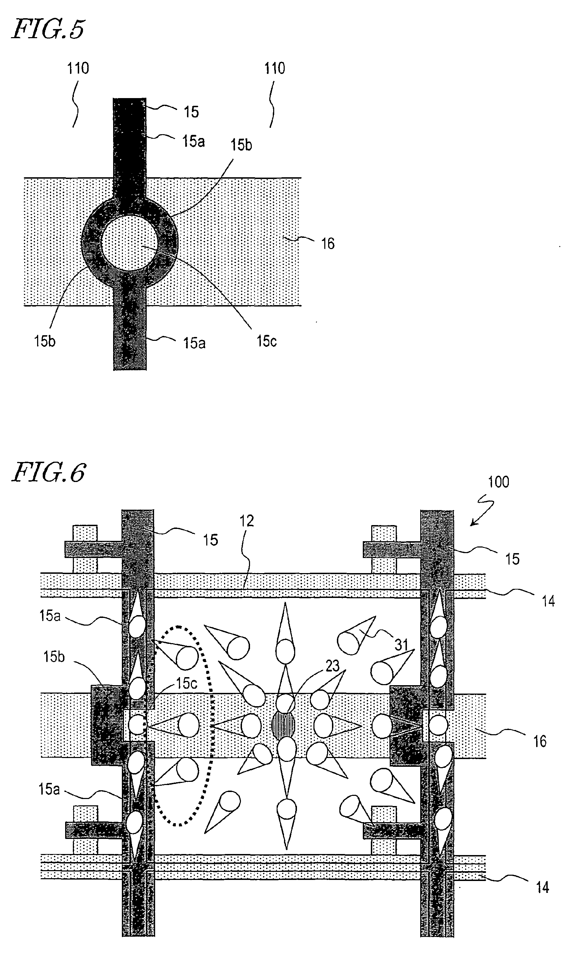

FIG. **5** is a diagram schematically showing a variation of the signal line **15.** As shown in FIG. **5****,** a circuitous portion **b** of the variation of the signal line **15** deflects to both sides, rather than deflecting to only one of the pixels **110,** such that a gap **15c** is formed at the center in which the signal line **15** is not provided. Even in this case, the liquid crystal molecules **31** lying above the gap **15c** are maintained generally vertical to the substrate surface. When a potential difference is produced between the signal line **15** and the counter electrode **20,** a region that constitutes a boundary of the alignment of the liquid crystal molecules lying on the boundary between the two adjacent pixels **110** is formed because of the presence of the gap **15c.**

In the present embodiment, the signal line **15** includes the two linear portions **15a** and the circuitous portion **15b.** However, an embodiment where only the scanning line **14** includes the two linear portions **15a** and the circuitous portion **15b** and an embodiment where both the scanning line **14** and the signal line **15** include the two linear portions **15a** and the circuitous portion **15b** are also among the embodiments of the present embodiment. If the scanning line **14** includes the two linear portions **15a** and the circuitous portion **15b,** the cross-sectional view taken along line C-C' of FIG. **1** will be basically the same as the cross-sectional view shown in FIG. **4** (except that the signal line **15** is replaced by the scanning line **14,** and the storage capacitor line **16** is omitted). In this case, with the presence of the circuitous portion **15b,** there is a gap **15c** lying between the two linear portions **15a** of the scanning line **14** and lying on the imaginary extension of the two linear portions **15a,** in which the scanning line **14** is not provided.

Note that a plurality of sets of the circuitous portion **15b** and the gap **15c** may be provided on one side of the pixel **110** or the pixel electrode **12.** In that case, in order to improve the symmetry of the inclination alignment of the liquid crystal molecules **31** in the pixel **110,** it is preferred that the plurality of sets of the circuitous portion **15b** and the gap **15c** are symmetrically positioned along the one side of the pixel **110** or the pixel electrode **12.**

FIG. **6** shows the alignment of the liquid crystal molecules **31** which occurs when a predetermined voltage (a voltage which is not less than the threshold voltage) is applied between the pixel electrode **12** and the counter electrode **22.** When a predetermined voltage is applied between the pixel electrode **12** and the counter electrode **22,** a liquid crystal domain in which the liquid crystal molecules **31** incline radially around the center of the pixel electrode **12** or the pixel **110** is formed over the pixel electrode **12** as shown in FIG. **6****.** The reason why such a liquid crystal domain of a radial inclination alignment is formed is that the alignment regulating force which results from an oblique electric field generated at an edge portion of the pixel electrode **12** works on the liquid crystal molecules **31.** The electric field generated at the edge of the pixel electrode **12** has an inclination toward the center of the pixel electrode **12** and causes the liquid crystal molecules **31** to fall in a radial inclination alignment.

In the present embodiment, the counter substrate **20** has projections **23,** so that the radial inclination alignment of the liquid crystal molecules **31** can be stabilized. The projections **23** are made of a transparent dielectric material (e.g., resin). Note that the projections **23** are not indispensable elements. The projections **23** may be replaced by a different type of alignment regulating structure (e.g., an opening formed in the counter electrode **22**)**.**

Further, in the liquid crystal display device **100** of the present embodiment, the signal line **15** has the circuitous portion **15b,** so that the gap **15c** is provided on the imaginary extension of the signal line **15.** Therefore, in the presence of an applied voltage, the liquid crystal molecules **31** lying above the gap **15c** are maintained generally vertical to the substrate surface. Thus, the inclination alignment of the liquid crystal molecules **31** lying above the linear portions **15a** can be quickly and stably regulated with the utilization of the vertical liquid crystal molecules **31** as the alignment center or alignment boundary. Meanwhile, the liquid crystal molecules **31** lying above the two linear portions **15a** at both sides of the gap **15c** fall in an inclination alignment in which inclination directions are symmetrical about the liquid crystal molecules **31** lying above the gap **15c** which serve as the alignment boundary. Therefore, the liquid crystal molecules **31** lying above the line are prevented from falling in a unidirectional alignment along the direction in which the line extends. Thus, as shown in the dotted circle of FIG. **6****,** the orientations of the liquid crystal molecules **31** in the vicinity of the pixel boundary are relatively uniformly held toward the pixel center, so that the resultant alignment approximates to the ideal radial alignment shown in FIG. **12(a)****.**

The liquid crystal layer **30** of the liquid crystal display device **100** is provided with the polymer structure **32,** as schematically shown in FIG. **2****,** for regulating the orientations of the liquid crystal molecules **31.** The polymer structure **32** may be formed over the vertical alignment film **33** by photopolymerizing a polymerizable composition (polymerizable monomer or oligomer) contained beforehand in a liquid crystal material prepared for formation of the liquid crystal layer **30.** The polymer structure **32** provides an alignment regulating force to regulate the liquid crystal molecules **31** so as to be in a radial inclination alignment. Therefore, in the absence of an applied voltage, the liquid crystal molecules **31** near the polymer structure **32** are oriented (pretilted) in the same directions as the inclination directions of the molecules which would occur in the presence of an applied voltage. In other words, even in the absence of an applied voltage, the polymer structure **32** regulates the pretilt azimuths of the liquid crystal molecules **31** so as to conform to the radial inclination alignment which would occur in the presence of an applied voltage. Therefore, the alignment stability and the response characteristics improve.

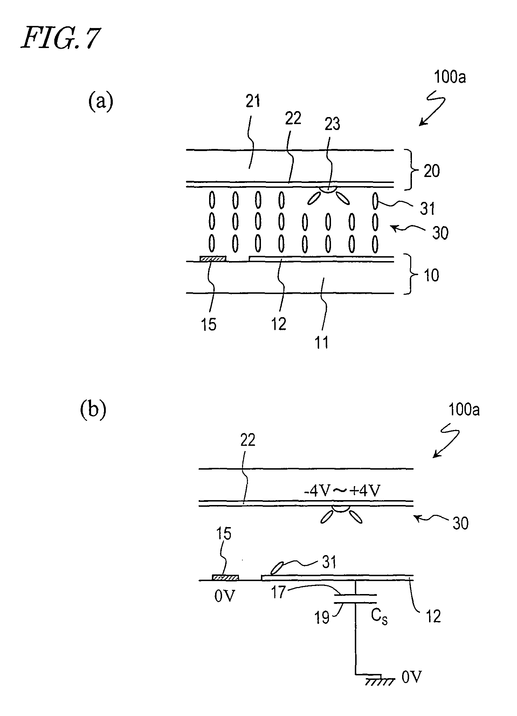

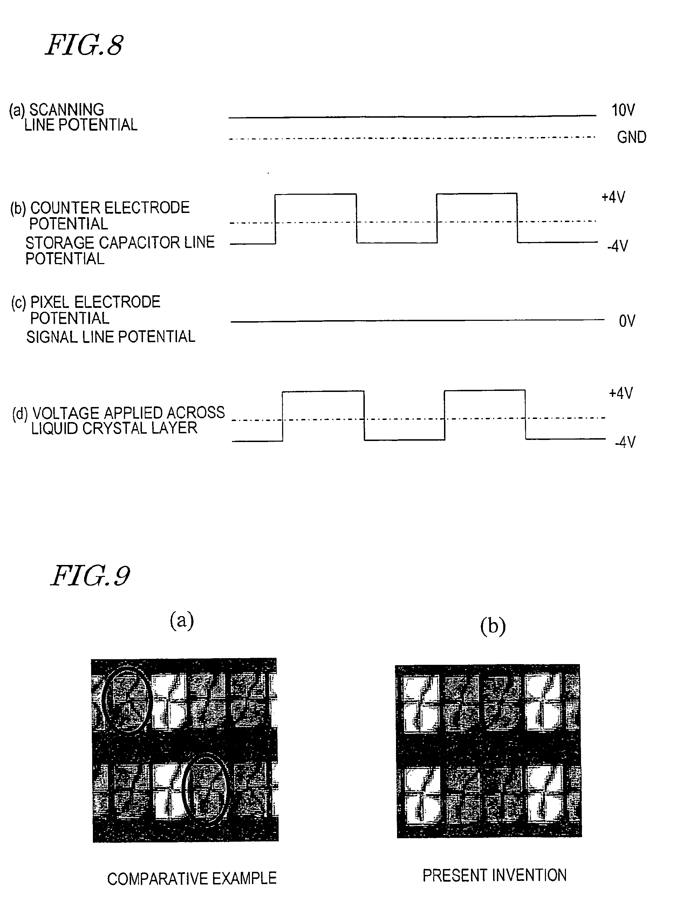

Next, a method of fabricating the liquid crystal display device **100** of the present embodiment is described with reference to FIG. **7** and FIG. **8****.**

First, as shown in FIG. **7(a)****,** a liquid crystal display panel **100a** which contains a polymerizable composition in the liquid crystal layer **30** is prepared. The TFT substrate **10** and the counter substrate **20** each can be formed according to any of various known methods. As the polymerizable composition, various materials for use in formation of a PSA-type polymer structure (e.g., the materials disclosed in Patent Documents 4 to 7) can be used.

Then, as shown in FIG. **7(b)****,** the polymerizable composition contained in the liquid crystal layer **30** is polymerized during application of a predetermined voltage across the liquid crystal layer **30** of the liquid crystal display panel **100a,** whereby the polymer structure **32** is formed. Typically, the polymerizable composition may be photopolymerizable. The polymerization may be realized by irradiating the liquid crystal layer **30** with light (specifically, UV light). The intensity and duration of the irradiation of the light may be determined appropriately depending on the polymerizable composition used. If the polymerizable composition is thermally polymerizable, the polymerization may be realized by heating.

In the fabrication method of the present embodiment, the PSA formation step includes alternately driving the liquid crystal layer **30** as follows. First, as shown in FIGS. **8(a)** and **8(c)****,** a gate-on voltage of +10 V is applied to the gate electrode of a TFT via the scanning line **14** so that the TFT is conducting. Meanwhile, the pixel electrode **12** is provided with a potential of 0 V (GND) via the signal line **15.** Under these conditions, referring to FIGS. **8(b)** and **8(d)****,** the potential of the counter electrode **22** is periodically oscillated between +4 V and -4 V, whereby the polarity of the voltage which is applied across the liquid crystal layer **30** is inverted between +4 V and -4 V. In this way, the alternate driving is realized. Meanwhile, the potential of the storage capacitor line **16** also oscillates according to the potential of the counter electrode **22.**

As described above, a liquid crystal display panel **100a** which includes the polymer structure **32** shown in FIG. **2** is obtained. In the liquid crystal display device of the present invention, as described above, at least one of the scanning line **14** and the signal line **15** has the circuitous portion **15b,** and the gap **15c,** in which the line is not provided on the imaginary extension of the scanning line **14** or the signal line **15,** is provided at the circumference of the pixel **110.**

When the alternate driving illustrated in FIG. **10 (c)** is performed, a difference is produced between the storage capacitor line potential and the counter electrode potential, so that a potential difference vertical to the substrate arises in the gap **15c,** and the liquid crystal molecules **31** at that position incline. However, by performing the alternate driving illustrated in FIG. **8****,** an equal voltage can be applied between the upper and lower substrates at the position of the gap **15c.** Specifically, 0 V is applied across the liquid crystal layer **30** extending above the gap **15c,** so that the liquid crystal molecules **31** lying above the gap **15c** can be fixed perpendicular to the substrate surface.

Thus, according to the present invention, during formation of the polymer structure **32** in the PSA formation step, the liquid crystal molecules **31** lying above the gap **15c** are maintained generally perpendicular to the substrate surface, and the inclination alignment of the liquid crystal molecules **31** lying above the linear portions **15a** can be quickly and stably regulated with the utilization of the vertical liquid crystal molecules **31** as the alignment center or alignment boundary. Meanwhile, the liquid crystal molecules **31** lying above the two linear portions **15a** at both sides of the gap **15c** fall in an inclination alignment in which inclination directions are symmetrical about the liquid crystal molecules **31** lying above the gap **15c** which serve as the alignment boundary. Therefore, the liquid crystal molecules **31** lying above the line are prevented from falling in a unidirectional alignment along the direction in which the line extends. Thus, as shown in the dotted circle of FIG. **6****,** the orientations of the liquid crystal molecules **31** in the vicinity of the pixel boundary are relatively identical toward the pixel center, so that the resultant alignment approximates to the ideal radial alignment shown in FIG. **12(a)****.** Accordingly, the disturbances in the alignment of the liquid crystal molecules near the line such as shown in FIGS. **12(b)** and **12(c)** decrease, and a regulating force which is capable of realizing the ideal alignment shown in FIG. **12 (a)** and FIG. **6** is provided to the polymer structure **32.**

Since the liquid crystal display device **100** has the polymer structure **32** which is formed as described above, the alignment regulating force (or alignment sustaining force) of the polymer structure **32** in the pixel serves to orient (pretilt) the liquid crystal molecules **31** near the polymer structure **32** toward the center of the pixel during the absence of an applied voltage in a display operation. Therefore, during the presence of an applied voltage, the liquid crystal molecules **31** in the pixel can be inclined radially and more uniformly. As a result, disturbances in the alignment which would occur in a display operation decrease, and the variation in alignment among the pixels decreases, so that occurrence of display roughness can be prevented.

When a voltage is applied in a display operation, the gap **15c,** which is formed by the circuitous portion **15b,** itself exerts an alignment boundary forming force to cause the liquid crystal molecules **31** at the pixel boundary to quickly fall in a symmetric alignment. Accordingly, the liquid crystal molecules **31** inside the pixel stably shift to a radial alignment in a shorter period of time.

Note that the circuitous portion **15b** may be provided above the storage capacitor line **16** so as not to affect the transmittance of the pixel. This also provides the merit of preventing the decrease in transmittance which is attributed to the provision of the circuitous portion **15b.** Since the circuitous portion **15b** is almost entirely provided under the pixel electrode **12,** an unnecessary voltage application effect which is caused by the circuitous portion **15b** to the liquid crystal molecules **31** can be blocked by a shield effect of the pixel electrode **12.**

FIG. **9(a)** is a microscopic image that was taken when the liquid crystal molecules were in an inclination alignment in a comparative liquid crystal display device example in which the signal line **15** did not have a circuitous portion **15b.** FIG. **9(b)** is a microscopic image that was taken when the liquid crystal molecules were in an inclination alignment in the liquid crystal display device **100** of the present embodiment. Note that, in both of the liquid crystal display devices, two polarizers are provided in a crossed Nicols arrangement (the polarization axes being perpendicular to each other). With the polarizers in this arrangement, a region in which liquid crystal molecules are oriented vertical to the substrates and a region in which liquid crystal molecules are oriented in an azimuth parallel to or vertical to the polarization axes of the polarizers are observed as being black. On the other hand, a region in which liquid crystal molecules are oriented in an azimuth which is deviated from the polarization axes is observed as being brighter, and a region in which liquid crystal molecules are oriented in an azimuth which forms an angle of 45° relative to the polarization axes is observed as being brightest.

In the comparative liquid crystal display device example, the distribution of brighter regions is different between some liquid crystal domains (indicated by solid circles) and the other liquid crystal domains as shown in FIG. **9(a)****.** This means that there is a variation in the liquid crystal alignment among the pixels. On the other hand, in the liquid crystal display device **100** of the present embodiment, the distribution of brighter regions is substantially the same among a plurality of liquid crystal domains as shown in FIG. **9(b)****.** This means that the liquid crystal alignment is generally equal among the pixels. Thus, according to the liquid crystal display device of the present embodiment, more desirable alignment of liquid crystal molecules is stably realized, and thus, high quality display is provided in which occurrence of display roughness is prevented.

Since the liquid crystal display device **100** of the present embodiment includes the line structure which has the above-described form, the polymer structure **32** can memorize a more ideal radial alignment. Specifically, in the example shown in FIG. **9(a)****,** downwardly bent dark lines (black lines) which are attributed to abnormal alignment of the liquid crystal molecules, such as a dark line on the left side of a red pixel (a pixel on the upper row which is indicated by solid circle) and a dark line on the right side of a blue pixel (a pixel on the lower row which is indicated by solid circle), were observed. On the other hand, in FIG. **9(b)** that shows a display state according to the present embodiment, the lines have a circuitous portion **15b** and a gap **15c** so that the alignment of liquid crystal molecules is stable. Therefore, the disturbances in the alignment such as shown in FIG. **9(a)** do not occur, and dark lines on the left and right sides in each pixel stably and uniformly extend in the left and right directions. Thus, according to the present embodiment, a more ideal radial alignment of the liquid crystal molecules is realized in a display operation, so that display roughness can be decreased.

The liquid crystal display device **100** used in the present embodiment is a CPA-mode liquid crystal display device, to which the present invention is however not limited. The present invention is applicable to a wide variety of liquid crystal display devices which include a vertical alignment type liquid crystal layer and in which a plurality of domains are formed in the presence of an applied voltage across the liquid crystal layer such that the azimuth of inclination of liquid crystal molecules is different among the domains (i.e., divisional alignment type liquid crystal display devices). For example, the present invention is suitably applicable to, for example, an MVA-mode liquid crystal display device.

The present embodiment is the liquid crystal display device **100** which includes the polymer structure **32** that is an alignment sustaining layer, although a liquid crystal display device which does not include such an alignment control layer, for example, a modification of the liquid crystal display device **100** from which the polymer structure **32** is omitted, is also within the extent of an embodiment of the present invention. Even in such an embodiment, in a display operation, the liquid crystal molecules **31** lying above the lines can be stably aligned relative to some of the liquid crystal molecules **31** lying above the gap **15c,** and furthermore, the liquid crystal molecules **31** in the pixel can be oriented toward the pixel center to achieve an ideal radial alignment.

### INDUSTRIAL APPLICABILITY

A liquid crystal display device of the present invention is suitably applicable to a wide variety of liquid crystal display devices, from small size devices to large size devices, including cell phones, PDAs, notebook PCs, display monitors, television receivers, etc.

### REFERENCE SIGNS LIST

- **10**: TFT substrate
- **11**: transparent substrate
- **12**: pixel electrode
- **13**: TFT
- **14**: scanning line
- **15**: signal line
- **15a**: linear portion
- **15b**: circuitous portion
- **15c**: gap
- **16**: storage capacitor line
- **17**: storage capacitor electrode
- **18**: insulating layer
- **19**: storage capacitor counter electrode
- **20**: counter substrate
- **21**: transparent substrate
- **22**: counter electrode
- **23**: projection (protrusion)
- **30**: liquid crystal layer
- **31**: liquid crystal molecules
- **32**: polymer structure (alignment control layer)
- **33**: vertical alignment film
- **100a**: liquid crystal display panel
- **100**: liquid crystal display device
- **110**: pixel

## Claims

1. A liquid crystal display device having a plurality of pixels arranged in a matrix along a first direction and a second direction that is different from the first direction, comprising:
a TFT substrate which includes thin film transistors and pixel electrodes corresponding to respective ones of the plurality of pixels, a signal line generally extending in the first direction for supplying a display signal to the thin film transistors, and a scanning line generally extending in the second direction for supplying a gate signal to the thin film transistors;
a counter substrate which includes a counter electrode that opposes the pixel electrodes;
a liquid crystal layer interposed between the TFT substrate and the counter substrate; and
an alignment film provided over a surface of at least one of the TFT substrate and the counter substrate, which is closer to the liquid crystal layer, for orienting liquid crystal molecules contained in the liquid crystal layer generally perpendicular to a substrate surface,
wherein at least one of the signal line and the scanning line includes two linear portions linearly extending in the first direction or the second direction at a boundary of two adjacent pixels and a circuitous portion which is interposed between the two linear portions and which is deviated from an imaginary extension of the two linear portions.

2. The liquid crystal display device of claim 1, wherein
the TFT substrate includes a storage capacitor line extending in the second direction,
the signal line includes two linear portions and the circuitous portion, and
the circuitous portion is provided at a position overlapping the storage capacitor line when viewed in a direction vertical to the substrate.

3. The liquid crystal display device of claim 1 or 2, wherein at least part of the circuitous portion is provided at a position overlapping the pixel electrode when viewed in a direction vertical to the substrate.

4. The liquid crystal display device of any of claims 1 to 3, wherein none of the signal line and the scanning line is provided in a region which lies between the two linear portions and which lies on an imaginary extension of the two linear portions.

5. The liquid crystal display device of any of claims 1 to 4, wherein the circuitous portion is provided at the middle of one side of the pixel.

6. The liquid crystal display device of any of claims 1 to 5 wherein, when a potential difference is produced between the signal line or the scanning line and the counter electrode, a region is formed due to the circuitous portion in which orientations of liquid crystal molecules are maintained generally perpendicular to a substrate surface.

7. The liquid crystal display device of any of claims 1 to 5 wherein, when a potential difference is produced between the signal line or the scanning line and the counter electrode, a boundary of a liquid crystal alignment along the signal line or the scanning line is formed at the boundary of the two pixels due to the circuitous portion.

8. The liquid crystal display device of any of claims 1 to 7, further comprising an alignment sustaining layer provided over a surface of the alignment film which is closer to the liquid crystal layer, the alignment sustaining layer being configured to regulate orientations of the liquid crystal molecules relative to a substrate surface.

9. The liquid crystal display device of claim 8, wherein the alignment sustaining layer is formed by a polymer structure which is formed by polymerizing a polymerizable composition contained in the liquid crystal layer.

10. A liquid crystal display device having a plurality of pixels arranged in a matrix along a first direction and a second direction that is different from the first direction, comprising:
a TFT substrate which includes thin film transistors and pixel electrodes corresponding to respective ones of the plurality of pixels, a signal line generally extending in the first direction for supplying a display signal to the thin film transistors, and a scanning line generally extending in the second direction for supplying a gate signal to the thin film transistors;
a counter substrate which includes a counter electrode that opposes the pixel electrodes;
a liquid crystal layer interposed between the TFT substrate and the counter substrate; and
an alignment film provided over a surface of at least one of the TFT substrate and the counter substrate, which is closer to the liquid crystal layer, for orienting liquid crystal molecules contained in the liquid crystal layer generally perpendicular to a substrate surface,
wherein when a potential difference is produced between the signal line or the scanning line and the counter electrode, a region is formed at a boundary of two adjacent pixels in which orientations of liquid crystal molecules are maintained generally perpendicular to a substrate surface.

11. The liquid crystal display device of claim 10 wherein, when a potential difference is produced between the signal line or the scanning line and the counter electrode, a boundary of a liquid crystal alignment along the signal line or the scanning line is formed at the boundary of the two pixels due to the liquid crystal molecules which are maintained generally perpendicularly in the region.

12. The liquid crystal display device of claim 10 or 11, wherein at least one of the signal line and the scanning line includes two linear portions linearly extending in the first direction or the second direction at the boundary of the two pixels and a circuitous portion which is interposed between the two linear portions and which detours around the region.

13. A method of fabricating a liquid crystal display device which has a plurality of pixels arranged in a matrix along a first direction and a second direction that is different from the first direction, the liquid crystal display device including
a TFT substrate which includes thin film transistors and pixel electrodes corresponding to respective ones of the plurality of pixels, a signal line generally extending in the first direction for supplying a display signal to the thin film transistors, and a scanning line generally extending in the second direction for supplying a gate signal to the thin film transistors,
a counter substrate which includes a counter electrode that opposes the pixel electrodes,
a liquid crystal layer interposed between the TFT substrate and the counter substrate, and
an alignment film provided over a surface of at least one of the TFT substrate and the counter substrate, which is closer to the liquid crystal layer, for orienting liquid crystal molecules contained in the liquid crystal layer generally perpendicular to a substrate surface,
the method comprising the steps of:
providing a liquid crystal display panel in which the liquid crystal layer containing a polymerizable composition is interposed between the TFT substrate and the counter substrate; and
polymerizing the polymerizable composition contained in the liquid crystal layer in the presence of an applied voltage across the liquid crystal layer to form an alignment sustaining layer over a surface of the alignment film which is closer to the liquid crystal layer,
wherein during the polymerization step, there is a region at a boundary of two adjacent pixels in which orientations of liquid crystal molecules are maintained generally perpendicular to a substrate surface.

14. The method of claim 13, wherein during the polymerization step, an alignment boundary of a liquid crystal alignment along the signal line or the scanning line is formed at the boundary of the two pixels due to the liquid crystal molecules which are maintained generally perpendicularly in the region.

15. The method of claim 13 or 14, wherein at least one of the signal line and the scanning line includes two linear portions linearly extending in the first direction or the second direction at the boundary of the two pixels and a circuitous portion which is interposed between the two linear portions and which detours around the region.
